# EUROPÄISCHE PATENTANMELDUNG

(11) **EP 1 878 933 A1**
(43) Veröffentlichungstag der Anmeldung: **16.01.2008**
(21) Anmeldenummer: 03026976.5
(22) Anmeldetag: 13.12.2003
(51) Int. Cl.: F16D 48/06

(54) **Reibungskupplungseinrichtung und Verfahren zur Diagnose einer Kupplungseinrichtung**

(30) Priorität: 28.11.2002 DE 10255386
(71) Anmelder: LuK Lamellen und Kupplungsbau Beteiligungs KG, 77815 Bühl (DE)
(72) Erfinder: Berger, Reinhard, Dr., 77815 Bühl (DE); Rieger, Christian, 76476 Bischweier (DE); Gerhart, Jürgen, 77767 Appenweier (DE); Martin, Jens, 76547 Sinzheim-Kartung (DE); Schneider, Georg, 76137 Karlsruhe (DE)

(57) **Zusammenfassung**

Die Erfindung betrifft ein Verfahren zur Diagnose einer Kupplungseinrichtung, eine Reibungskupplungseinrichtung für ein Kraftfahrzeug, ein Antriebstrangsystem für ein Kraftfahrzeug sowie ein Kraftfahrzeug mit einer Reibungskupplungseinrichtung und einem Antriebsstrangsystem, wobei
- wenigstens ein vorbestimmer erster Kennwert ermittelt und/oder überwacht wird;
- in Abhängigkeit von Veränderungen dieses ersten Kennwertes und/oder in Abhängigkeit eines Vergleiches dieses Kennwertes mit einer Schwelle quantitativ oder qualitativ gemäß einer vorbestimmten Charakteristik ermittelt oder abgeschätzt wird, ob Verschleiß an der Kupplungseinrichtung gegeben ist und/oder eine vorbestimmte Verschleißgrenze erreicht oder überschritten ist; und wobei
- ein elektrisches Signal erzeugt wird, welches qualitativ oder quantitativ anzeigt, dass Kupplungsverschleiß gegeben ist, wenn Verschleiß oder das Erreichen oder Überschreiten einer vorbestimmten Verschleißgrenze der Kupplungseinrichtung festgestellt wurde.

## Beschreibung

Die Erfindung betrifft ein Verfahren zur Diagnose einer Kupplungseinrichtung, eine Reibungskupplungseinrichtung für ein Kraftfahrzeug, ein Antriebsstrangsystem für ein Kraftfahrzeug sowie ein Kraftfahrzeug.

Kupplungseinrichtungen für Kraftfahrzeuge sowie Antriebsstrangsysteme mit einer solchen Kupplungseinrichtung sind bereits in unterschiedlichsten Ausgestaltungen bekannt. So ist es beispielsweise bekannt, in einem Antriebsstrang eines Kraftfahrzeugs eine Reibungskupplung als Anfahrkupplung zu verwenden. Derartige Anfahrkupplungen sind beispielsweise als sogenannte selbstnachstellende oder nicht-selbstnachstellende Kupplungseinrichtungen bekannt. Ferner sind verschiedene Betätigungsmechanismen für derartige Kupplungssysteme bekannt. Beispielsweise sind Betätigungsmechanismen bekannt, die eine hydraulische oder eine mechanische Übertragungsstrecke aufweisen. Weiter ist bekannt, dass zur Betätigung der Kupplung eine Kraft des Fahrers, die beispielsweise über ein Pedal eingeleitet werden kann, auf die Kupplung übertragen wird. Dies kann beispielsweise mechanisch oder hydraulisch erfolgen. Bekannt ist ferner, dass Kupplungen elektronisch gesteuert werden. Hierzu kann beispielsweise ein Steuergerät vorgesehen sein, das einen Aktor mit Elektromotor ansteuert, der wiederum hydraulisch oder pneumatisch oder auf sonstige Weise eine Kraft auf die Kupplung überträgt.

Ferner sind Antriebstrangsysteme mit derartigen Kupplungseinrichtungen bekannt.

Auch Kraftfahrzeuge mit derartigen Kupplungseinrichtungen oder Anthebssträngen sind bekannt.

Der Erfindung liegt die Aufgabe zugrunde, ein Verfahren zu schaffen, welches ein betriebssicheres Betreiben einer Kupplungseinrichtung ermöglicht, sowie eine betriebssichere Kupplungseinrichtung, einen betriebssicheren Antriebsstrang mit einer Kupplungseinrichtung sowie ein betriebssicheres Kraftfahrzeug.

Die Aufgabe wird gelöst durch ein Verfahren gemäß Anspruch 1 oder gemäß Anspruch 2. Eine erfindungsgemäße Reibungskupplungseinrichtung ist Gegenstand des Anspruchs 40. Ein erfindungsgemäßes Antriebsstrangsystem ist Gegenstand des Anspruchs 46. Ein erfindungsgemäßes Kraftfahrzeug ist Gegenstand des Anspruchs 48 oder des Anspruchs 49. Bevorzugte Gestaltungen sind Gegenstand der Unteransprüche.

Erfindungsgemäß ist insbesondere ein Verfahren zur Diagnose einer Kupplungseinrichtung vorgesehen. Es wird ein vorbestimmter erster Kennwert ermittelt und/oder überwacht.

Ein solcher erster Kennwert kann beispielsweise ein Kennwert der Kupplungseinrichtung sein. Ein erster Kennwert kann beispielsweise ein Betriebskennwert sein, also ein Kennwert, der sich während des Betriebs der Kupplungseinrichtung verändern kann. Ein erster Kennwert kann ein mechanischer oder ein nicht-mechanischer Kennwert sein. Es kann auch vorgesehen sein, dass ein erster Kennwert eine messbare Größe ist, die ggf. auch gemessen wird. Ein erster Kennwert kann aber auch ein nicht messbarer oder nicht direkt messbarer Kennwert sein. Es kann auch vorgesehen sein, dass der erste Kennwert berechnet oder abgeschätzt wird. Beispielsweise kann ein erster Kennwert ein vorbestimmter Kennwert oder Parameter der Kupplungskennlinie einer solchen Kupplung sein. Ein Beispiel für einen solchen Parameter der Kupplungskennlinie ist der Tastpunkt. Der Tastpunkt soll dabei eine Stellung der Kupplung bzw. eines Betätigungssystems der Kupplung sein, bei der die Kupplung ein vorbestimmtes Drehmoment übertragen kann. Ein solches Drehmoment kann beispielsweise im Bereich von 3 bis 4 N/m liegen. Auch andere, insbesondere geringe, übertragbare Drehmomente können zur Definition des Tastpunkts gewählt werden. Ein erster Kennwert kann beispielsweise auch ein funktioneller Zusammenhang oder ein Mittelwert mehrerer Einzelkennwerte sein.

Ein weiteres Beispiel für einen ersten Kennwert stellt die Reibarbeit oder die Reibleistung einer Kupplungseinrichtung dar. Die Ermittlung bzw. die Überwachung des ersten Kennwerts kann auf unterschiedlichste Weise vorgenommen werden. So kann beispielsweise der erste Kennwert gemessen werden. Ein weiteres Beispiel für die Überwachung bzw. Ermittlung eines ersten Kennwerts ist so, dass der erste Kennwert berechnet wird. Der erste Kennwert kann auch abgeschätzt werden. Auch Mischformen von Berechnung, Ermittlung und Abschätzung des ersten Kennwerts sind bevorzugt. So kann beispielsweise zur Ermittlung der Reibleistung einer Kupplung einerseits die Motordrehzahl ermittelt oder gemessen werden, und andererseits die Raddrehzahl eines Kraftfahrzeugs, wobei in Abhängigkeit dieser Drehzahlen, und gegebenenfalls in Abhängigkeit vorhandenen Übersetzungen, die Reibleistung bzw. Reibenergie der Kupplungseinrichtung ermittelt wird.

Dabei können beispielsweise zusätzlich Tabellen oder dergleichen herangezogen werden, welche, insbesondere in Form einer Abschätzung, Energie bzw. Leistungsanteile berücksichtigen, die Verlustenergie bzw. -leistung darstellen, jedoch keine Reibleistung bzw. -energie der Kupplungseinrichtung sind.

Die Erfindung soll allerdings durch diese beispielhaften Kennwerte sowie beispielhaften Möglichkeiten der Ermittlung oder Überwachung des ersten Kennwerts nicht beschränkt werden.

Erfindungsgemäß ist insbesondere vorgesehen, dass in Abhängigkeit von Veränderungen des ersten Kennwerts oder in Abhängigkeit eines Vergleichs des ersten Kennwerts mit einer Schwelle bzw. einem Referenzkennwert quantitativ oder qualitativ gemäß einer vorbestimmten Charakteristik ermittelt oder abgeschätzt wird, ob Verschleiß in der Kupplungseinrichtung gegeben ist.

Erfindungsgemäß ist insbesondere vorgesehen, dass ein elektrisches Signal erzeugt wird, welches qualitativ oder quantitativ anzeigt, dass Kupplungsverschleiß gegeben ist, wenn durch entsprechende Ermittlung oder Abschätzung festgestellt wird, dass Verschleiß der Kupplung gegeben ist oder eine vorbestimmte Verschleißgrenze der Kupplungseinrichtung festgestellt wird.

Eine solche Verschleißgrenze kann beispielsweise ein vorbestimmter, bereits aufgetretener Verschleiß sein oder eine vorbestimmte, noch gegebene Verschleißreserve.

Eine Kupplungseinrichtung im Sinne der vorliegenden Erfindung kann insbesondere eine selbstnachstellende oder eine nicht-selbstnachstellende Kupplungseinrichtung sein.

Es sei angemerkt, dass das Erreichen der Verschleißgrenze im Sinne der vorliegenden Erfindung auch so sein kann, dass die Verschleißgrenze bereits überschritten ist.

Die Aufgabe wird ferner gelöst durch ein Verfahren gemäß Anspruch 2.

Erfindungsgemäß ist insbesondere ein Verfahren zur Diagnose einer Kupplungseinrichtung vorgesehen, bei dem ein erster Kennwert ermittelt und überwacht wird, wobei in Abhängigkeit von Veränderungen dieses ersten Kennwerts und/oder in Abhängigkeit eines Vergleichs dieses Kennwerts mit einer Schwelle quantitativ oder qualitativ gemäß einer vorbestimmten Charakteristik ermittelt wird, ob eine Funktionsbeeinträchtigung der Kupplungseinrichtung gegeben ist. Eine solche Funktionsbeeinträchtigung ist in einer bevorzugten Gestaltung eine Funktionsbeeinträchtigung des Betätigungssystems einer Kupplungseinrichtung. Ein solches Betätigungssystem kann beispielsweise einen Aktor aufweisen sowie ein Ausrücksystem, das von dem Aktor betätigbar ist. Ein derartiger Aktor kann beispielsweise einen Elektromotor aufweisen.

Erfindungsgemäß ist insbesondere vorgesehen, dass bei ermittelter Funktionsbeeinträchtigung ein elektrisches Signal erzeugt wird, welches qualitativ oder quantitativ die Funktionsbeeinträchtigung anzeigt.

Vorzugsweise wird der erste Kennwert elektronisch verarbeitet und/oder übertragen. Es kann auch vorgesehen sein, dass der erste Kennwert elektronisch gespeichert wird. In einer bevorzugten Gestaltung ist vorgesehen, dass ein erster Kennwert zu unterschiedlichen Zeitpunkten ermittelt wird und die jeweiligen Werte in unterschiedlichen Speicherzellen abgelegt werden.

Es kann insbesondere vorgesehen sein, dass zur Abschätzung oder Ermittlung des Kupplungsverschleißes oder zur Überprüfung, ob eine Funktionsbeeinträchtigung der Kupplung gegeben ist, überwacht wird, ob längerfristige Veränderungen des ersten Kennwerts gegeben sind. Dies kann so sein, dass betriebsbedingte Kennwertschwankungen unberücksichtigt bleiben bzw. als solche berücksichtigt werden. Es kann beispielsweise vorgesehen sein, dass - bei einem entsprechenden ersten Kennwert - überwacht wird, ob sich der erste Kennwert zunehmend vergrößert oder verkleinert.

In einer bevorzugten Weiterbildung wird in einem Fehlerspeicher ein Eintrag gesetzt, wenn ein vorbestimmter Verschleiß oder das Erreichen einer vorbestimmten Verschleißgrenze festgestellt wird. Es kann auch vorgesehen sein, dass ein Eintrag in einem Fehlerspeicher gesetzt wird, wenn eine Funktionsbeeinträchtigung im Ausrücksystem detektiert wird. Ein solches Ausrücksystem kann insbesondere ein Ausrücksystem mit hydraulischer Übertragungsstrecke sein. Dabei kann eine derartige Funktionsbeeinträchtigung beispielsweise so sein, dass Luft in einer Leitung bzw. Ausrückleitung dieser hydraulischen Strecke gegeben ist, oder so, dass eine Leckage in einer solchen Leitung gegeben ist.

Ein derartiger Fehlerspeichereintrag kann beispielsweise verwendet werden, um bei einem Werkstattbesuch eine schnelle Diagnose oder Problembeseitigung zu ermöglichen.

Ein solcher Fehlereintrag kann auch verwendet werden, um Steuerungsstrategien zu modifizieren bzw. anzupassen. Beispielsweise könnte bei gesetztem Fehlereintrag die Kupplung auf andere Weise angesteuert werden als in Situationen, bei denen kein Fehlereintrag gesetzt ist.

Ein derartiger Fehlereintrag kann auch zu anderen Zwecken verwendet werden.

Es kann auch vorgesehen sein, dass ein vom Menschen bzw. vom Fahrer eines Kraftfahrzeugs wahmehmbares Signal, insbesondere ein akustisches Signal und/oder ein optisches Signal, erzeugt wird, wenn ein vorbestimmter Verschleiß oder das Erreichen einer vorbestimmten Verschleißgrenze festgestellt wird. In entsprechender Weise kann auch ein derartiges Signal erzeugt werden, wenn eine Funktionsbeeinträchtigung der Kupplungseinrichtung, und zwar insbesondere eine Funktionsbeeinträchtigung des Ausrücksystems der Kupplungseinrichtung, festgestellt wird.

Ein solches Signal kann insbesondere erzeugt werden, um den Fahrer auf den Verschleiß oder das Erreichen einer Verschleißgrenze bzw. eine Funktionsbeeinträchtigung rechtzeitig hinzuweisen. Es kann auch vorgesehen sein, dass dem Fahrer über eine Anzeigeeinrichtung der aktuelle Verschleiß der Kupplungseinrichtung bzw. die noch zur Verfügung stehende Verschleißreserve angezeigt wird.

In einer bevorzugten Gestaltung ist vorgesehen, dass die Kupplungseinrichtung eine Betätigungseinrichtung aufweist und der erste Kennwert eine Stellung eines Bauteils dieser Betätigungseinrichtung ist. Eine solche Betätigungseinrichtung kann beispielsweise auch einen Aktor mit Elektromotor aufweisen. Es kann auch vorgesehen sein, dass eine solche Betätigungseinrichtung ein Ausrücksystem mit mechanischer oder hydraulischer Übertragungsstrecke aufweist. Auch Kombinationen aus hydraulischen und mechanischen Ausrücksystemen können vorgesehen sein. Es können aber auch Ausrücksysteme vorgesehen sein, die auf einem anderen Prinzip basieren, wie beispielsweise auf einem pneumatischen.

Durch diese Prinzipien soll die Erfindung allerdings nicht beschränkt sein.

Es kann beispielsweise vorgesehen sein, dass die Betätigungseinrichtung einen elektronisch gesteuerten Aktor aufweist. Dabei kann beispielsweise überwacht werden, ob der Aktorweg eine vorbestimmte Aktorwegschwelle überschreitet. Es kann beispielsweise auch eine Art Anschlagerkennung vorgesehen sein. Ferner kann vorgesehen sein, dass bei einem bestimmten Aktorweg ein Sensor ein Signal auslöst, welches das Erreichen dieser Aktorwegschwelle anzeigt. Es kann ferner vorgesehen sein, dass eine solche Aktorwegschwelle einer vorbestimmten Verschleißgrenze der Kupplungseinrichtung zugeordnet ist. Es kann auch vorgesehen sein, dass eine solche Aktorwegschwelle so gesetzt wird, dass auf eine Funktionsbeeinträchtigung der Kupplungseinrichtung bzw. eines Ausrücksystems einer Kupplungseinrichtung geschlossen werden kann, wenn der Aktorweg diese Aktorwegschwelle erreicht.

Wenn der Aktorweg die Aktorwegschwelle erreicht oder überschritten hat, wird in einer bevorzugten Ausführungsform festgestellt, dass die Verschleißgrenze erreicht ist bzw. eine Funktionsbeeinträchtigung der Kupptungseinrichtung oder des Ausrücksystems gegeben ist.

Bevorzugt ist auch, dass zu dieser Feststellung ein mehrmaliges Feststellen des Erreichens bzw. Überschreitens der Aktorwegschwelle gefordert wird. Dies kann insbesondere aus Gründen der Redundanz vorgesehen sein.

In einer bevorzugten Gestaltung wird eine solche Aktorwegschwelle zur Feststellung des Erreichens der Verschleißgrenze oder einer Funktionsbeeinträchtigung bei Kupplungssystemen verwendet, deren Ausrücksysteme eine mechanische Übertragungsstrecke aufweisen. Aber auch eine Verwendung bei Kupplungssystemen mit anders gestalteten Übertragungsstrecken ist bevorzugt.

Es kann auch vorgesehen sein, dass die Betätigungseinrichtung einen Geberzylinder und einen Nehmerzylinder aufweist. Dabei kann beispielsweise zwischen dem Geberzylinder und dem Nehmerzylinder eine hydraulische Übertragungsstrecke vorgesehen sein.

Ein erster Kennwert kann bei einem solchen System beispielsweise die Stellung des Geberzylinders oder die Stellung des Nehmerzylinders sein. Es kann auch vorgesehen sein, dass sowohl die Geberzylinderstellung als auch die Nehmerzylinderstellung jeweils einen ersten Kennwert darstellen. Dies kann beispielsweise zur redundanten Überprüfung vorgesehen sein. Bevorzugt ist dabei, dass einer vorbestimmten Stellung des Nehmerzylinders oder des Geberzylinders eine vorbestimmte Verschleißgrenze zugeordnet ist, wobei das Erreichen bzw. Überschreiten der Verschleißgrenze festgestellt wird, wenn der Nehmer- bzw. Geberzylinder die entsprechende Wegschwelle erreicht oder überschritten hat.

Insbesondere bei Systemen mit mechanischem Übertragungssystem kann auch vorgesehen sein, dass das Erreichen bzw. Überschreiten einer vorbestimmten Verschleißgrenze an einem am Kupplungssteller angeordneten Positionssensor ermittelt bzw. erkannt wird.

Gemäß einer bevorzugten Gestaltung ist vorgesehen, dass ein erster Kennwert die Verlustleistung und/oder die Verlustenergie an der Kupplungseinrichtung ist, bzw. die kumulierte Verlustleistung oder Verlustenergie.

Es kann auch vorgesehen sein, dass ein erster Kennwert bzw. verschiedene erste Kennwerte Kennwerte sind, anhand welcher die Verlustleistung oder Verlustenergie der Kupplungseinrichtung berechnet oder abgeschätzt wird.

Bevorzugt ist vorgesehen, dass die Verlustleistung bzw. Verlustenergie der Kupplungseinrichtung abgeschätzt oder ermittelt wird und in Abhängigkeit der kumulierten Verlustleistung oder Verlustenergie ermittelt wird, ob Verschleiß an der Kupplungseinrichtung gegeben ist. Hierbei kann insbesondere vorgesehen sein, dass die Verlustleistung über die Lebensdauer der Kupplungseinrichtung integriert wird. In einer bevorzugten Gestaltung wird angenommen, dass der Verschleiß temperaturproportional zur Verlustleistung ist.

In einer bevorzugten Gestaltung ist vorgesehen, dass einem vorbestimmten Integrationswert eine Verschleißgrenze der Kupplungseinrichtung zugeordnet ist, wobei bei Erreichen dieses Integrationswerts der Verlustleistung darauf geschlossen wird, dass diese Verschleißgrenze erreicht ist.

Vorzugsweise ist vorgesehen, dass der Verschleiß an einer Kupplungsscheibe über die Berechnung der eingetragen Reibenergie ermittelt oder abgeschätzt wird, die mit dem spezifischen Verschleiß verrechnet wird und über die Zeit integriert wird.

Es sei angemerkt, dass der Verschleiß der Kupplungseinrichtung im Sinne der vorliegenden Erfindung insbesondere der Verschleiß an der Kupplungsscheibe bzw. des Reibbelages einer Kupplung sein kann.

In einer bevorzugten Gestaltung wird anhand des Tastpunktes einer Kupplungseinrichtung ermittelt, ob eine vorbestimmte Verschleißgrenze der Kupplungseinrichtung erreicht oder überschritten wird bzw. welche Verschleißreserve der Kupplungseinrichtung verbleibt oder welcher Kupplungsverschleiß aktuell gegeben ist.

Es kann auch in Abhängigkeit des Tastpunktes ermittelt werden, ob eine Funktionsbeeinträchtigung der Kupplungseinrichtung bzw. des Ausrücksystems der Kupplungseinrichtung gegeben ist.

In einer bevorzugten Gestaltung ist vorgesehen, dass der Tastpunkt im Betrieb der Kupplungseinrichtung adaptiert wird bzw. mehrfach adaptiert wird. Es kann auch vorgesehen sein, dass der Tastpunkt im wesentlichen laufend adaptiert wird.

Die Tastpunktadaption kann beispielsweise so sein, dass die Kupplung im Betrieb so eingestellt wird, dass sie das vorbestimmte, dem Tastpunkt zugeordnete, Drehmoment übertragen kann und die bei diesem übertragbaren Moment gegebene Stellung eines Bauteils der Kupplungseinrichtung, wie Bauteil der Ausrückeinrichtung oder Aktorweg oder dergleichen, ermittelt wird. Es kann dabei beispielsweise vorgesehen sein, dass ein Wegsensor vorgesehen ist und die bei diesem übertragbaren Moment vom Wegsensor angezeigte Stellung als Tastpunkt gespeichert wird. Die Tastpunktadaption kann aber auch auf andere Weise durchgeführt werden.

In einer bevorzugten Gestaltung wird der Tastpunkt der Kupplungseinrichtung zu unterschiedlichen Zeitpunkten jeweils ermittelt. Dabei werden die unterschiedlichen, ermittelten Werte miteinander verglichen. Es kann auch vorgesehen sein, dass vorbestimmte ausgewählte Werte miteinander verglichen werden. Ferner kann vorgesehen sein, dass ein vorbestimmter Tastpunkt bzw. Wert dieses Tastpunktes als Referenztastpunkt oder Referenzwert festgesetzt wird, und mit diesem Wert ein anderer oder mehrere andere Werte für den Tastpunkt verglichen werden. Besonders bevorzugt ist vorgesehen, dass festgestellt wird, dass ein Verschleiß der Kupplungseinrichtung gegeben ist, und/oder dass festgestellt wird, dass eine Funktionsbeeinträchtigung der Kupplungseinrichtung, insbesondere eine Funktionsbeeinträchtigung des Betätigungssystems, gegeben ist, wenn die Differenz zwischen vorbestimmten Werten des Tastpunktes größer als eine vorbestimmte Schwelle ist. Dies kann insbesondere auch so sein, dass die Feststellung getroffen wird, wenn die Differenz zwischen einem, insbesondere adaptierten, Tastpunkt und einem Referenzwert größer als eine vorbestimmte Schwelle ist.

Auch hier kann vorgesehen sein, dass die Feststellung getroffen wird, wenn mehrfach festgestellt wird, dass die entsprechende Differenz größer als eine vorbestimmte Schwelle ist.

Bevorzugt ist zumindest einer der Werte, die einem solchen Vergleich zugeführt werden, ein adaptierter Tastpunkt. Besonders bevorzugt wird ein solcher adaptierter Tastpunkt kurz nach oder unmittelbar nach einer Tastpunktadaption dem Vergleich zugeführt.

Es kann auch vorgesehen sein, dass bei der Abschätzung oder Ermittlung des Kupplungsverschleißes und/oder bei der Abschätzung oder Ermittlung, ob eine Funktionsbeeinträchtigung der Kupplungseinrichtung gegeben ist, wie Funktionsbeeinträchtigung des Ausrücksystems, gemäß einer vorbestimmten Charakteristik, berücksichtigt wird, ob die Kupplungseinrichtung in der Einlaufphase ist.

Gemäß einer bevorzugten Gestaltung wird die entsprechende Abschätzung oder Ermittlung vorgenommen oder nur vorgenommen, wenn die Kupplungseinrichtung außerhalb der Einlaufphase ist. Es kann auch vorgesehen sein, dass die entsprechende Ermittlung bzw. Abschätzung laufend vorgenommen wird. Es kann ferner vorgesehen sein, dass eine etwaige Weiterverarbeitung der Ergebnisse nur dann vorgenommen wird, wenn die Kupplungseinrichtung außerhalb der Einlaufphase ist.

Die Einlaufphase ist insbesondere gegeben, wenn sich der vorbestimmte Kennwert aufgrund von Setzvorgängen im Belagsystem oder im Federsystem, wie Tellerfeder, der Kupplungseinrichtung verändert. Dieser erste Kennwert kann dabei insbesondere der Tastpunkt sein. Bei manchen Kupplungen treten derartige Setzvorgänge etwa auf den ersten 1000 bis 2000 Fahrkilometem auf. Diese Werte können je nach Kupplung auch anders gestaltet sein.

Im folgenden werden nun einige beispielhafte Varianten beschrieben, mittels welcher ermittelt werden kann, ob die Einlaufphase abgeschlossen ist.

Diese Möglichkeiten sollen allerdings nicht als abschließende Möglichkeiten verstanden werden. Die beispielhaften Varianten können einzeln herangezogen werden oder in einer beliebigen Verknüpfung. So können beispielsweise zwei oder mehrere dieser Varianten herangezogen werden, um redundant festzustellen, ob die Einlaufphase beendet ist.

Eine Möglichkeit zur Überprüfung, ob die Einlaufphase abgeschlossen ist, besteht darin, dass die Gesamtlaufstrecke der Kupplungseinrichtung seit ihrem Einbau ermittelt wird und überprüft wird, ob diese Gesamtlaufstrecke größer als eine vorbestimmte Schwelle ist. Bei in einem Kraftfahrzeug verbauter Kupplungseinrichtung kann dies beispielsweise anhand eines Kilometerzählers ermittelt werden. Eine solche Schwelle kann beispielsweise bei 2000 km liegen. Auch andere Werte können vorgesehen sein.

Eine weitere Möglichkeit zur Überprüfung, ob die Einlaufphase abgeschlossen ist, besteht darin, dass die Reibenergie der Kupplungseinrichtung erfasst und kumuliert wird, wobei überprüft wird, ob die kumulierte Reibenergie eine vorbestimmte Schwelle überschreitet. Dabei kann die Beendigung der Einlaufphase festgestellt werden, wenn die kumulierte Reibenergie die Schwelle überschreitet. Ein Beispiel für eine solche Schwelle ist ein Wert von 20 MJ. Es können aber auch andere Schwellenwerte vorgesehen sein.

Eine weitere Möglichkeit zur Überprüfung, ob die Einlaufphase beendet ist, ist so, dass in Abhängigkeit der Kupplungstemperatur und/oder der seit dem Einbau der Kupplungseinrichtung vergangenen Zeit überprüft wird, ob die Einlaufphase beendet ist. Dies kann beispielsweise so sein, dass die Zeit kumuliert wird, während welche die Kupplungstemperatur oberhalb einer vorbestimmten Temperaturschwelle ist. Es kann ferner dann überprüft werden, ob die kumulierte Zeitperiode eine vorbestimmte Zeitschwelle überschreitet. Sofern eine solche vorbestimmte Zeitschwelle erreicht oder überschritten wird, kann festgestellt werden, dass die Einlaufphase beendet ist.

Wie bereits erwähnt, können auch Kombinationen dieser Überprüfungsmöglichkeiten vorgesehen sein.

Bevorzugt ist ferner, dass redundant bzw. zur Plausibilitätsüberprüfung qualitativ oder quantitativ mehrfach ermittelt wird, ob Verschleiß der Kupplungseinrichtung gegeben ist bzw. eine vorbestimmte Verschleißgrenze erreicht oder überschritten ist. In entsprechender Weise kann auch vorgesehen sein, dass mehrfach ermittelt wird, ob eine Funktionsbeeinträchtigung der Kupplungseinrichtung, wie Funktionsbeeinträchtigung des Betätigungssystems, gegeben ist.

Sofern ein Signal, welches die entsprechende Information anzeigt, beispielsweise zu Steuerungszwecken oder Anzeigezwecken oder auf sonstige Weise weiter verarbeitet werden soll, kann vorgesehen sein, dass diese Weiterverarbeitung nur dann erfolgt, wenn sich bei den jeweiligen redundanten Ermittlungen das gleiche Ergebnis gezeigt hat. Es kann auch vorgesehen sein, dass bereits ein weiter zu verarbeitendes Signal ausgegeben wird, welches eine Funktionsbeeinträchtigung der Kupplungseinrichtung bzw. ein Erreichen einer Verschleißgrenze anzeigt, wenn sich bereits bei einer Überprüfung ergeben hat, dass die Verschleißgrenze erreicht ist bzw. eine Funktionsbeeinträchtigung gegeben ist.

Gemäß einer bevorzugten Gestaltung wird der zu Beginn der Einlaufphase gegebene Tastpunkt ermittelt und/oder der Tastpunkt, der im wesentlichen beim Ablauf der Einlaufphase gegeben ist. Der letztgenannte Tastpunkt kann beispielsweise festgestellt werden, nachdem festgestellt wurde, dass die Einlaufphase abgeschlossen ist.

Bevorzugt ist jeweils vorgesehen, dass ferner ein Tastpunkt nach Ablauf der Einlaufphase adaptiert wird. Dieser Tastpunkt kann beispielsweise laufend adaptiert werden. Dabei wird bevorzugt dieser Tastpunkt mit dem zu Beginn oder im wesentlichen bei Beendigung der Einlaufphase ermittelten Tastpunkt verglichen. Es kann auch vorgesehen sein, dass der adaptierte Tastpunkt sowohl mit dem zu Beginn der Einlaufphase gegebenen Tastpunkt als auch mit dem im wesentlichen bei Beendigung der Einlaüfphase gegebenen Tastpunkt verglichen wird. Es kann vorgesehen sein, dass die Differenz zwischen den genannten Tastpunkten gebildet wird und in Abhängigkeit dieser Differenz quantitativ oder qualitativ ermittelt wird, ob ein Verschleiß der Kupplungseinrichtung gegeben ist. In entsprechender Weise kann auch ermittelt werden, ob eine Funktionsbeeinträchtigung der Kupplungseinrichtung bzw. des Ausrücksystems der Kupplungseinrichtung gegeben ist.

Vorzugsweise ist die Schwelle für die Tastpunktdifferenz zwischen adaptiertem Tastpunkt und Tastpunkt, der zu Beginn der Einlaufphase gegeben ist, anders gewählt als die Schwelle für die Differenz, die zwischen dem adaptierten Tastpunkt und dem Tastpunkt, der im wesentlichen bei Ablauf der Einlaufphase gegeben ist, gesetzt wird.

Ein Vergleich mit dem Tastpunkt, der zu Beginn der Einlaufphase gegeben ist, sowie ein Vergleich mit dem Tastpunkt, der im wesentlichen beim Ablauf der Einlaufphase gegeben ist, kann insbesondere auch vorgenommen werden, um eine redundante Überprüfung vorzunehmen.

Die Schwelle für die Differenz zwischen dem adaptierten Tastpunkt und dem Tastpunkt, der im wesentlichen bei Beendigung der Einlaufphase gegeben ist, kann beispielsweise 2 mm sein. Es können allerdings auch andere Werte für die Schwelle gegeben sein.

In einer bevorzugten Gestaltung wird der Tastpunkt, der zu Beginn der Einlaufphase gegeben ist und/oder der Tastpunkt, der im wesentlichen bei Beendigung der Einlaufphase gegeben ist, jeweils in einem Speicher gespeichert. Dies kann insbesondere eine nichtflüchtige Speicherzelle sein. Besonders bevorzugt wird ferner der Tastpunkt, der nach Ablauf der Einlaufphase bzw. nach einer Adaption ermittelt wird, gespeichert, und zwar insbesondere in einer nicht-flüchtigen Speicherzelle. Es kann auch vorgesehen sein, dass dieser adaptierte Tastpunkt für Steuerungszwecke zusätzlich in einer weiteren, separaten Speicherzelle gespeichert wird, so dass gegebenenfalls der gleiche Wert mehrfach gespeichert wird.

Es kann auch vorgesehen sein, dass ein adaptierter Tastpunkt mit einer Schwelle für diesen Tastpunkt verglichen wird, ohne (zusätzlich) mit einem Tastpunkt verglichen zu werden, der zu Beginn oder im wesentlichen bei Beendigung der Einlaufphase gegeben ist.

Es können, wie bereits auch erwähnt, unterschiedlich gestaltete Kupplungseinrichtung vorgesehen sein. So können beispielsweise solche Kupplungseinrichtungen vorgesehen sein, bei welchen die Tastpunktverschiebung während einer Einlaufphase die gleiche Richtung aufweist, wie eine Tastpunktverschiebung, die bei Verschleiß gegeben ist. Es können auch Kupplungseinrichtungen vorgesehen sein, bei denen diese Tastpunktverschiebungen gegenläufig sind.

So wandern bei konventionellen Kupplungen bestimmter Bauart die Tellerfederzungen bei Verschleiß in Richtung Getriebe, so dass der Tastpunkt sinkt, während bei selbstnachstellenden Kupplungen häufig der Tastpunkt steigt, wobei die Tellerfederzunge in Richtung Motor wandert. Dies Vorgenannte gilt insbesondere dann, wenn die Kupplungseinrichtung in einem Kraftfahrzeug bzw. in einen Antriebsstrang eines Kraftfahrzeugs verbaut ist. Insbesondere derartige Phänomene werden in einer bevorzugten Gestaltung des erfindungsgemäßen Verfahrens berücksichtigt.

Bevorzugt ist ferner, dass in Abhängigkeit der zeitlichen Änderungsrate eines ersten Kennwerts, oder insbesondere des Tastpunktes, qualitativ oder quantitativ ermittelt wird, ob Verschleiß der Kupplungseinrichtung gegeben ist, und/oder ob eine Funktionsbeeinträchtigung der Kupplungseinrichtung, wie Funktionsbeeinträchtigung des Betätigungssystems der Kupplungseinrichtung, gegeben ist. Besonders bevorzugt wird auf diese Weise in Abhängigkeit der Änderungsrate des ersten Kennwerts, insbesondere des Tastpunktes, ermittelt ob eine vorbestimmte Verschleißgrenze der Kupplungseinrichtung erreicht oder überschritten wird. Beispielsweise kann die Änderungsrate unter Berücksichtigung der Fahrzeuglaufstrecke berücksichtigt werden.

In einer bevorzugten Gestaltung ist vorgesehen, dass die Kupplungseinrichtung gemäß einer vorbestimmten ersten Steuerungsstrategie bzw. einem ersten Steuerprogramm angesteuert wird, so lange nicht oder noch nicht festgestellt wurde, dass eine vorbestimmte Verschleißgrenze erreicht wurde. Sofern dann festgestellt wird, dass diese Verschleißgrenze erreicht oder überschritten wird, wird die Kupplungseinrichtung gemäß dieser bevorzugten Gestaltung gemäß einer zweiten, von der ersten verschiedenen, Steuerungsstrategie angesteuert. Es können auch mehr als zwei unterschiedliche Steuerungsstrategien vorgesehen werden. Beispielsweise kann vorgesehen sein, dass die erste Steuerungsstrategie eine Schlupfregelung beinhaltet, während diese in der zweiten Steuerungsstrategie deaktiviert wird. Möglich ist auch, dass die zweite Steuerungsstrategie gegenüber der ersten ein schärferes Einkuppeln nach einem Gangwechsel vorsieht. Möglich ist auch, dass bei der zweiten Steuerungsstrategie gegenüber der ersten die Anfahrdrehzahl abgesenkt wird. Eine Vielzahl weiterer Möglichkeiten sind bevorzugt. Insbesondere ist die zweite Steuerungsstrategie so, dass gegenüber der ersten weniger Reibleistung bzw. Reibungsenergie in die Kupplung eingeleitet wird.

In einer bevorzugten Gestaltung wird der erste Kennwert oder eine Funktion des ersten Kennwerts automatisiert ermittelt. Bevorzugt ist ferner, dass das erfindungsgemäße Verfahren automatisiert gestartet und/oder durchgeführt wird.

In einer bevorzugten Gestaltung der Erfindung wird der aktuelle Verschleiß bzw. der aktuelle Verschleißgrad der Kupplungseinrichtung ermittelt und gegebenenfalls angezeigt.

Dieses Anzeigen kann beispielsweise über eine Anzeigevorrichtung wie Monitor, Lampenleiste oder dergleichen erfolgen.

Es kann auch vorgesehen sein, dass das Überschreiten einer Verschleißgrenze oder eine Funktionsstörung des Betätigungssystems über einen Bordcomputer angezeigt wird.

In einer bevorzugten Gestaltung kann das erfindungsgemäße Verfahren bei Clutch-by-Wire-Systemen verwendet werden. Insbesondere kann vorgesehen sein, dass der Fahrer über ein Pedal Kupplungsbetätigungen auslösen kann. Dabei ist bevorzugt vorgesehen, dass eine auf das Kupplungspedal ausgeübte Kraft nicht unmittelbar auf die Küpplungseinrichtung übertragen wird. Beispielsweise kann vorgesehen sein, dass bei Betätigung des Kupplungspedals ein elektrisches Signal erzeugt wird, welches an ein elektronisches Steuergerät gesandt wird, das dann die Kupplungsbetätigung steuert. Es kann auch vorgesehen sein, dass über ein elektronisches Steuergerät gemäß einer vorbestimmten Charakteristik überprüft wird, ob tatsächlich eine Kupplungsbetätigung stattfinden soll.

Hierbei können beispielsweise sicherheitskritische Situationen oder dergleichen Berücksichtigung finden. Es ist allerdings auch möglich, dass kein Kupplungspedal vorhanden ist oder ein Kupplungspedal, welches über andere als den vorbeschriebenen Kupplungsmechanismus eine Kupplungsbetätigung auslöst bzw. auslösen kann.

In einer bevorzugten Gestaltung ist vorgesehen, dass das erfindungsgemäße Verfahren zumindest teilweise durchgeführt wird und dann, beispielsweise bei einem Werkstattbesuch und/oder weil festgestellt wurde, dass die Verschleißgrenze der Kupplung überschritten ist, die Kupplung bzw. zumindest die das Drehmoment übertragenden Teile der Kupplung ausgetauscht werden. Gemäß dieser bevorzugten Gestaltung ist vorgesehen, dass anschließend das erfindungsgemäße Verfahren neu gestartet wird.

So kann beispielsweise, im Falle einer bevorzugten Gestaltung des erfindungsgemäßen Verfahrens, der Tastpunkt, der zu Beginn einer Einlaufphase der Kupplungseinrichtung gegeben ist und/oder der Tastpunkt, der im wesentlichen bei Beendigung der Einlaufphase gegeben ist, neu belegt bzw. ermittelt werden und abgespeichert werden.

In einer bevorzugten Gestaltung ist die Kupplungseinrichtung in einem Kraftfahrzeug montiert und weist eine Betätigungseinrichtung mit einem Aktor und einem Ausrücksystem auf. Hierbei ist besonders bevorzugt, dass das erfindungsgemäße Verfahren zumindest teilweise durchgeführt wird, wobei ein Referenztastpunkt verwendet wird. Ein solcher Referenztastpunkt kann beispielsweise in Tastpunkt sein, der ermittelt wird, oder ein Tastpunkt, der vorab festgesetzt wird.

Besonders bevorzugt ist ein solcher Referenztastpunkt ein Tastpunkt, der zu Beginn einer Einlaufphase der Kupplungseinrichtung gegeben ist und/oder ein Tastpunkt, der im wesentlichen bei Beendigung der Einlaufphase gegeben ist.

Gemäß dieser bevorzugten Gestaltung wird der Aktor bzw. Aktorbauteil und/oder zumindest ein Bauteil des Ausrücksystems ausgetauscht. Ein Grund für das Austauschen kann beispielsweise ein detektierter Fehler bzw. eine Funktionsbeeinträchtigung oder dergleichen sein. Ein derartiger Austausch kann auch routinemäßig vorgenommen werden. Es können auch andere Gründe für einen solchen Austausch gegeben sein. Gemäß dieser Gestaltung des erfindungsgemäßen Verfahrens wird nach dem Austausch des Bauteils des Ausrücksystems bzw. des Aktors eine Tastpunktadaption durchgeführt, wobei der dabei ermittelte Tastpunkt mit einem zuvor, vor dem Austausch, abgespeicherten und adaptierten langfristigen Tastpunkt verglichen wird. Sofern gemäß dieser bevorzugten Ausführungsform der Vergleich ergibt, dass die Differenz kleiner als ein Schwellenwert ist, dieser kann beispielsweise 0,2 mm sein oder auch einen anderen Wert aufweisen, wird das erfindungsgemäße Verfahren fortgesetzt. Hierbei ist insbesondere vorgesehen, dass der vor dem Austausch verwendete Referenztastpunkt weiter benutzt wird.

Gemäß dieser bevorzugten Gestaltung kann ferner vorgesehen sein, dass der oder die Referenztastpunkte um eine Differenz korrigiert werden, wenn die Differenz zwischen den genannten adaptierten Tastpunkten größer oder gleich dem Schwellenwert sind. Die Differenz, um welche der Referenzwert korrigiert wird, entspricht dabei vorzugsweise der Abweichung zwischen den genannten adaptierten Tastpunkten.

Es kann auch vorgesehen sein, dass eine derartige Korrektur stets nach dem Austausch eines Bauteils des Kupplungsaktors oder des Ausrücksystems vorgenommen wird.

Gemäß einer weiter bevorzugten Gestaltung wird in derartigen Fällen das erfindungsgemäße Verfahren stets neu gestartet.

In einer besonders bevorzugten Gestaltung wird als erster Kennwert der Tastpunkt verwendet, um bei Systemen mit mechanischer Übertragungsstrecke im Ausrücksystem den Kupplungsverschleiß oder das Erreichen oder Überschreiten einer Verschleißgrenze zu ermitteln.

Vorzugsweise wird bei Kupplungssystemen mit hydraulischer Übertragungsstrecke als erster Kennwert der Tastpunkt verwendet, um eine Funktionsbeeinträchtigung des Ausrücksystems zu detektieren. Eine solche Funktionsbeeinträchtigung kann beispielsweise so sein, dass Luft im hydraulischen System gegeben ist.

Bei der letztgenannten Gestaltung ist besonders bevorzugt, dass Verschleiß der Kupplungseinrichtung oder das Erreichen oder Überschreiten einer Verschleißgrenze ermittelt wird, indem als erster Kennwert die Stellung des Nehmerzylinders verwendet wird.

Durch diese Gestaltungen soll die Erfindung allerdings nicht beschränkt werden.

In einer bevorzugten Gestaltung wird das erfindungsgemäße Verfahren bei elektronisch gesteuerten Kupplungseinrichtungen bzw. automatisierten Kupplungseinrichtungen verwendet.

Die Erfindung soll hierdurch allerdings nicht beschränkt werden.

Bei Kupplungssystemen mit hydraulischer Übertragungsstrecke kann ferner vorgesehen sein, dass eine Volumenausgleichseinrichtung vorgesehen ist. Diese kann beispielsweise so sein, dass in einer hydraulischen Strecke eine Schnüffelbohrung mit sich anschließendem Volumenausgleichsbehälter vorgesehen ist. Im Volumenausgleichsbehälter ist vorzugsweise ein definierter Druck, wie beispielsweise Umgebungsdruck, gegeben. Zum Volumenausgleich kann vorgesehen sein, dass in einem vorbestimmten Stellungsbereich des Geberzylinders die Volumenausgleichsbohrung so angeordnet ist, dass bei einer Belastung des Geberzylinders Hydraulikfluid in den Flüssigkeitsbehälter gedrückt wird bzw. ein Volumenausgleich mit der hydraulischen Strecke stattfindet, wobei insbesondere auch Luft aus der hydraulischen Strecke in den Volumenausgleichsbehälter gedrückt werden kann. Es kann auch Hydraulikfluid zum Volumenausgleich in die hydraulische Strecke aus dem Vorratsbehälter fließen. Nach Überfahren der Schnüffelbohrung ist dann eine vorbestimmte Fluidsäule im Hydrauliksystem gegeben, die im wesentlichen reproduzierbar ist. Ein solche Volumenausgleichseinrichtung kann auch anders gestaltet sein.

Die Aufgabe wird ferner gelöst durch eine Reibungskupplungseinrichtung gemäß Anspruch 40.

Erfindungsgemäß ist insbesondere eine Reibungskupplungseinrichtung für ein Kraftfahrzeug vorgesehen. Die Reibungskupplungseinrichtung weist ein Betätigungssystem auf, das wiederum einen Aktor aufweist. Dieser Aktor kann ein Ausrücksystem belasten, das zwischen dem Aktor und den das Drehmoment übertragenden Kupplungsteilen angeordnet sein kann. Ferner ist gemäß dieser Gestaltung ein elektronisches Steuergerät vorgesehen, welches den Aktor ansteuern kann. Innerhalb dieses elektronischen Steuergeräts oder in Signalverbindung mit dem elektronischen Steuergerät ist ferner eine Speichereinrichtung vorgesehen, und zwar insbesondere eine elektronische Speichereinrichtung. In dieser Speichereinrichtung ist eine Steuerungssoftware abgelegt bzw. gespeichert. Mit dieser Steuerungssoftware kann ein erfindungsgemäßes Verfahren gesteuert werden, und zwar insbesondere automatisch. Das Zusammenwirken der Software mit dem übrigen System kann so sein, dass das erfindungsgemäße Verfahren automatisch gestartet werden kann.

In einer bevorzugten Gestaltung ist die Reibungskupplungseinrichtung eine Anfahrkupplungseinrichtung eines Kraftfahrzeugs. Es kann auch vorgesehen sein, dass ein Kupplungspedal vorgesehen ist. Ein solches Kupplungspedal kann allerdings auch fehlen.

In einer bevorzugten Gestaltung ist ein Kupplungspedal gegeben, über welches Kupplungsbetätigungen ausgelöst werden können, wobei eine Betätigung dieses Kupplungspedals ein elektrisches Signal bewirkt, das an ein Steuergerät übertragen wird. Das Steuergerät steuert dann die Kupplungsbetätigung. Insbesondere ist also vorgesehen, dass das Kupplungspedal nicht-mechanisch bzw. nicht direkt mechanisch mit den drehmomentübertragenden Teilen der Kupplung verbunden ist. Bei dieser Gestaltung kann auch vorgesehen sein, dass im Steuergerät überprüft wird, ob tatsächlich eine Kupplungsbetätigung ausgelöst werden soll. Hierzu können bestimmte Bedingungen herangezogen werden. Solche können beispielsweise darauf abzielen, dass sicherheitskritische Situationen vermieden oder möglichst vermieden werden.

Es kann auch vorgesehen sein, dass die Kupplungseinrichtung ein Ausrücksystem mit einer hydraulischen oder mechanischen Übertragungsstrecke aufweist. Aber auch anders gestaltetet Übertragungsstrecken oder Übertragungsstrecken, die auf einem anderen Prinzip basieren, sind bevorzugt.

Vorzugsweise ist vorgesehen, dass das elektronische Steuergerät einen Fehlerspeicher aufweist oder mit einem Fehlerspeicher in Signalverbindung steht.

Die Aufgabe wird ferner gelöst durch ein Antriebsstrangsystem gemäß Anspruch 46.

Erfindungsgemäß ist insbesondere ein Antriebsstrangsystem für ein Kraftfahrzeug vorgesehen. Das Antriebsstrangsystem weist einen mit einer Brennkraftmaschine gekoppelten Antriebsstrang auf. In diesem Antriebsstrang ist eine erfindungsgemäße Reibungskupplungseinrichtung vorgesehen. Ferner ist in diesem Antriebsstrang eine Getriebeeinrichtung vorgesehen, in welcher unterschiedliche Übersetzungen geschaltet werden können. Die Getriebeeinrichtung kann so sein, dass die unterschiedlichen Übersetzungen gestuft geschaltet werden können oder so, dass sie stufenlos geschaltet werden können.

In einer bevorzugten Gestaltung ist die Getriebeeinrichtung ein automatisiertes Schaltgetriebe. Es kann aber auch eine anders gestaltete Getriebeeinrichtung vorgesehen sein, wie beispielsweise ein CVT oder ein automatisches Getriebe.

Die Aufgabe wird ferner gelöst durch ein Kraftfahrzeug gemäß Anspruch 48.

Erfindungsgemäß ist insbesondere ein Kraftfahrzeug mit einer erfindungsgemäßen Reibungskupplungseinrichtung vorgesehen. Das Kraftfahrzeug weist femer ein erfindungsgemäßes Antriebsstrangsystem auf. Ferner weist das Kraftfahrzeug eine Fahrgastzelle auf, in welcher eine Signaleinrichtung vorgesehen ist. Diese Signaleinrichtung kann beispielsweise eine optische oder eine akustische Signaleinrichtung sein. Die Signaleinrichtung kann auch ein Bordcomputer sein. Erfindungsgemäß ist insbesondere vorgesehen, dass diese Signaleinrichtung ein Signal anzeigt, wenn eine vorbestimmte Verschleißgrenze der Kupplungseinrichtung erreicht ist. Es kann auch vorgesehen sein, dass die Signaleinrichtung ergänzend oder alternativ den aktuellen Verschleißgrad der Kupplungseinrichtung anzeigt. Ferner kann ergänzend oder alternativ vorgesehen sein, dass die Signaleinrichtung anzeigt, wenn eine Funktionsbeeinträchtigung der Kupplungseinrichtung detektiert wurde. Eine solche Funktionsbeeinträchtigung kann beispielsweise eine Funktionsbeeinträchtigung des Betätigungssystems der Kupplungseinrichtung sein.

Die Aufgabe wird ferner gelöst durch ein Kraftfahrzeug gemäß Anspruch 49.

Erfindungsgemäß ist insbesondere ein Kraftfahrzeug mit einer erfindungsgemäßen Kupplungseinrichtung und einem erfindungsgemäßen Antriebsstrangsystem vorgesehen. Das Kraftfahrzeug weist ferner einen Bordcomputer auf, der in einer Fahrgastzelle dieses Kraftfahrzeugs vorgesehen ist. Der Bordcomputer ist mit einer Anzeigeeinrichtung, wie Monitor, versehen. Über die Anzeigeeinrichtung des Bordcomputers kann der aktuelle Verschleißgrad der Kupplungseinrichtung angezeigt werden. Ergänzend oder alternativ kann über den Bordcomputer angezeigt werden, wenn eine vorbestimmte Verschleißgrenze der Kupplungseinrichtung erreicht ist. Es kann auch vorgesehen sein, dass die Verschleißreserve über den Bordcomputer bzw. dessen Anzeigeeinrichtung angezeigt werden kann.

Ergänzend oder alternativ kann auch vorgesehen sein, dass eine detektierte Funktionsbeeinträchtigung der Kupplungseinrichtung, wie beispielsweise eine Funktionsbeeinträchtigung des Ausrücksystems einer Kupplungseinrichtung, über die Anzeigeeinrichtung des Bordcomputers angezeigt wird.

Unter dem Begriff "Steuern" ist im Sinne der vorliegenden Erfindung insbesondere "Regeln" und/oder "Steuern" im Sinne der DIN zu verstehen. Entsprechendes gilt für von dem Begriff "Steuern" abgeleitete Begriffe.

Im folgenden werden nun einige beispielhafte bzw. bevorzugte Aspekte der erfindungsgemäßen Gestaltungen anhand der Figuren erläutert, wodurch die Erfindung allerdings nicht beschränkt werden soll.

Dabei zeigt:
- Fig. 1: die Schritte eines beispielhaften erfindungsgemäßen Verfahrens in schematischer Darstellung;
- Fig. 2: die Schritte eines beispielhaften erfindungsgemäßen Verfahrens in schematischer Darstellung;
- Fig. 3: die Schritte eines beispielhaften erfindungsgemäßen Verfahrens in schematischer Darstellung; und
- Fig. 4: die Schritte eines beispielhaften erfindungsgemäßen Verfahrens in schematischer Darstellung.

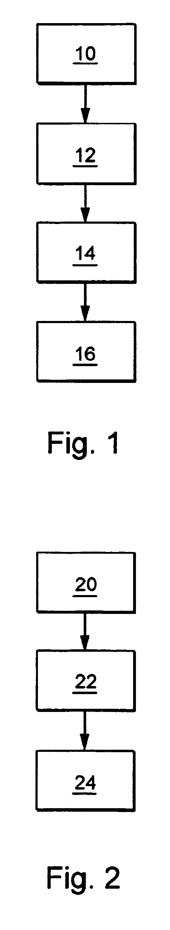

Fig. 1 zeigt die Schritte eines beispielhaften erfindungsgemäßen Verfahrens in schematischer Darstellung.

Im Schritt 10 wird ein vorbestimmter erster Kennwert ermittelt und/oder überwacht. Dieser erste Kennwert kann beispielsweise der Tastpunkt einer Kupplungseinrichtung oder die kumulierte Reibungsenergie einer Kupplungseinrichtung sein.

Im Schritt 12 wird ein bestimmter Wert des ersten Kennwerts mit einem Referenzwert verglichen. Dieser Referenzwert kann beispielsweise ein Wert für den ersten Kennwert sein, der zu einem anderen Zeitpunkt, insbesondere früheren Zeitpunkt, ermittelt wurde.

In Abhängigkeit dieses Vergleiches gemäß Schritt 12 wird im Schritt 14 ermittelt oder abgeschätzt, ob Verschleiß der Kupplungseinrichtung gegeben ist. Es kann auch überprüft werden, ob eine vorbestimmte Verschleißgrenze erreicht oder überschritten ist.

Im Schritt 16 wird ein elektrisches Signal erzeugt, welches qualitativ oder quantitativ anzeigt, dass Kupplungsverschleiß gegeben ist, sofern Verschleiß detektiert wurde. Es kann auch vorgesehen sein, dass im Schritt 16 durch das elektrische Signal angezeigt wird, wenn die vorbestimmte Verschleißgrenze erreicht oder überschritten ist.

Fig. 2 zeigt die Schritte eines beispielhaften erfindungsgemäßen Verfahrens in schematischer Darstellung.

Im Schritt 20 wird ein vorbestimmter erster Kennwert ermittelt und/oder überwacht.

Im Schritt 22 wird in Abhängigkeit von Veränderungen dieses Kennwerts und/oder in Abhängigkeit eines Vergleichs dieses Kennwerts mit einer Schwelle oder bzw. einem Referenzkennwert für diesen ersten Kennwert quantitativ oder qualitativ ermittelt, ob eine Funktionsbeeinträchtigung der Kupplung gegeben ist.

Eine solche Funktionsbeeinträchtigung kann insbesondere eine Funktionsbeeinträchtigung eines Betätigungssystems der Kupplungseinrichtung sein. Die Funktionsbeeinträchtigung kann beispielsweise eine Funktionsbeeinträchtigung eines Ausrücksystems der Kupplungseinrichtung sein. Insbesondere kann vorgesehen sein, dass ein solches Ausrücksystem auf einem hydraulischen Prinzip basiert.

Im Schritt 24 wird ein elektrisches Signal erzeugt, welches qualitativ oder quantitativ anzeigt, dass eine Funktionsbeeinträchtigung detektiert wurde, sofern dies der Fall ist.

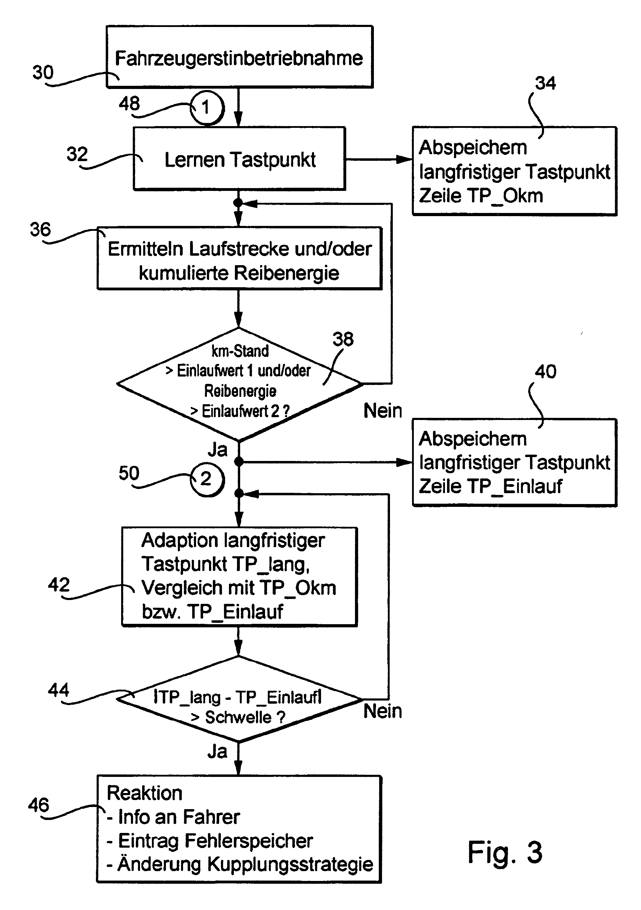

Fig. 3 zeigt die Schritte eines beispielhaften erfindungsgemäßen Verfahrens in schematischer Darstellung.

Im Schritt 30 wird ein Kraftfahrzeug mit einer Reibungskupplungseinrichtung in Betrieb genommen bzw. erstmalig in Betrieb genommen.

Im Schritt 32 wird der Tastpunkt der Reibungskupplungseinrichtung ermittelt bzw. gelemt.

Dieser Tastpunkt wird als langfristiger Tastpunkt im Schritt 34 in einer ersten Speicherzelle abgespeichert. Dieser Tastpunkt kann beispielsweise ein Tastpunkt sein, der im wesentlichen bei einer Fahrstrecke von im wesentlichen 0 km gegeben ist. Es können aber auch einige Kilometer bereits gefahren sein.

Im Schritt 36 wird die Lauf- bzw. Fahrstrecke des Kraftfahrzeugs seit der Fahrzeugerstinbetriebnahme bzw. einem Neustart ermittelt. Alternativ oder ergänzend kann auch die kumulierte Reibenergie der Kupplung ermittelt werden. Die kumulierte Reibenergie ist insbesondere die kumulierte Reibenergie, die durch Reibung an den Kupplungshälften gegeben ist.

Im Schritt 38 wird überprüft, ob der Kilometerstand des Kraftfahrzeugs größer als eine erste Schwelle bzw. ein Einlaufwert ist. Es kann auch hier vorgesehen sein, dass dies den Kilometerstand seit einem Neustart betrifft.

Ergänzend oder alternativ kann im Schritt 38 überprüft werden, ob die kumulierte Reibenergie der Kupplungseinrichtung größer als ein zweiter Einlaufwert bzw. eine entsprechende Schwelle ist.

Sofern hierbei im Schritt 38 festgestellt wird, dass der Kilometerstand geringer als der erste Einlaufwert ist und/oder die Reibenergie geringer als der zweite Einlaufwert ist, wird im Schritt 36 fortgefahren.

Sofern im Schritt 38 allerdings festgestellt wird, dass die seit Erstinbetriebnahme bzw. seit Verfahrensneustart zurückgelegte Fahrstrecke größer als der erste Einlaufwert ist und/oder die Reibenergie größer als der zweite Einlaufwert ist, wird der aktuelle Tastpunkt im Schritt 40 in einer zweiten Speicherzelle gespeichert. Dieser Tastpunkt wird auch als TP_Einlauf bezeichnet bzw. als Tastpunkt, der im wesentlichen bei Beendigung einer Einlaufphase gegeben ist.

Ferner wird im Schritt 42 der langfristige Tastpunkt adaptiert. Dieser langfristige Tastpunkt wird mit dem Tastpunkt, der im wesentlichen zu Beginn der Einlaufphase gegeben ist und/oder mit dem Tastpunkt, der im wesentlichen bei Beendigung der Einlaufphase gegeben ist, verglichen.

Im Schritt 44 wird überprüft, ob die Differenz oder betragsmäßige Differenz zwischen dem Schritt 42 adaptierten Tastpunkt und dem im Schritt 40 abgespeicherten Tastpunkt größer als eine vorbestimmte Schwelle ist. Ergänzend oder alternativ kann hier auch überprüft werden, ob die Differenz bzw. betragsmäßige Differenz zwischen dem Schritt 42 adaptierten Tastpunkt und dem im Schritt 32 gelemten Tastpunkt größer als eine vorbestimmte Schwelle ist. Die beiden genannten Schwellen können dabei insbesondere unterschiedliche Werte aufweisen.

Sofern im Schritt 44 festgestellt wird, dass die betragsmäßige Tastpunktdifferenz und/oder beide betragsmäßige Tastpunktdifferenzen nicht größer als die jeweilige vorbestimmte Schwelle sind, wird im Schritt 42 fortgefahren.

Sofern im Schritt 44 jedoch festgestellt wird, dass - je nach Gestaltung - die jeweilige Tastpunktdifferenz größer als die jeweilige Schwelle ist oder eine dieser Tastpunktdifferenzen größer als eine vorbestimmte Schwelle ist, wird im Schritt 46 eine vorbestimmte Reaktion ausgelöst.

Diese Reaktion kann beispielsweise so sein, dass dem Fahrer akustisch oder optisch oder auf sonstige Weise angezeigt wird, dass eine bestimmte Verschleißgrenze der Kupplungsgrenze erreicht oder überschritten ist. Es kann auch ergänzend oder alternativ vorgesehen sein, dass in einem Fehlerspeicher ein Eintrag gesetzt wird.

Ebenfalls ergänzend oder alternativ kann vorgesehen sein, dass die Strategie zur Ansteuerung der Kupplung modifiziert wird, und zwar insbesondere so, dass möglichst weniger Reibenergie in der Kupplung freigesetzt wird.

In Fig. 3 ist ferner eine eingekreiste 1 (Bezugszeichen 48) sowie eine eingekreiste 2 (Bezugszeichen 50) eingetragen.

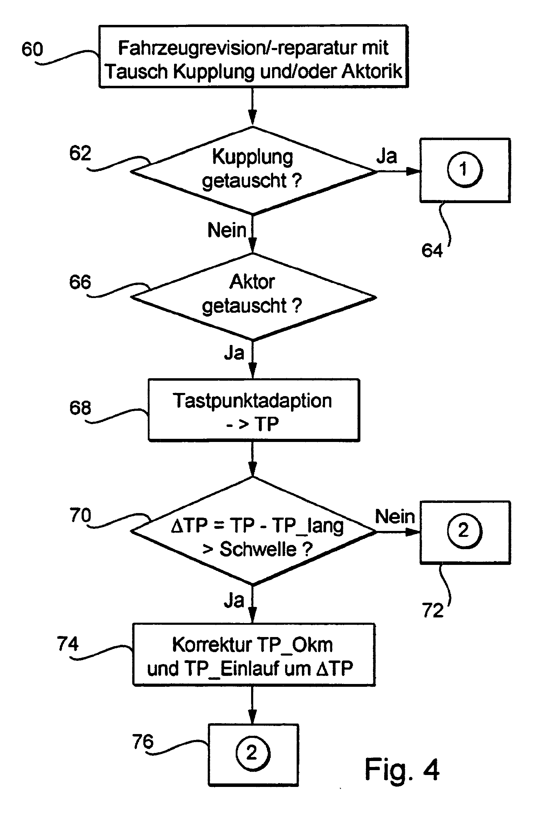

Durch diese eingekreisten Ziffern soll angedeutet werden, dass das in Fig. 3 dargestellte, beispielhafte Verfahren in einer besonders bevorzugten Gestaltung auch mit dem in Fig. 4 dargestellten, beispielhaften Verfahren kombiniert werden kann.

Fig. 4 zeigt die Schritt eines beispielhaften erfindungsgemäßen Verfahrens in schematischer Darstellung.

Im Schritt 60 wird im Rahmen einer Reparatur oder aus sonstigen Gründen die Kupplung oder die Aktorik in einem Kraftfahrzeug ausgewechselt. In diesem speziellen Fall ist unter der Kupplung insbesondere ein Bereich zu verstehen, der die in einem Antriebsstrang angeordneten Drehmoment übertragenden Teile aufweist.

Die Aktorik kann eine Betätigungseinrichtung oder ein Teil der Betätigungseinrichtung sein, wie hydraulische oder mechanische Strecke oder dergleichen. Die Aktorik kann auch beispielsweise ein Elektromotor sein oder ein Aktor.

Im Schritt 62 wird überprüft, ob die Kupplung oder ein Teil der Kupplung ausgetauscht wurde.

Sofern dies der Fall ist, wird, wie beim Bezugszeichen 64 angedeutet, das Verfahren beim Bezugszeichen 48 in Fig. 3 bzw. die im Schritt 32 aus Fig. 3 fortgesetzt.

Sofern allerdings im Schritt 62 festgestellt wurde, dass die Kupplung: nicht getauscht wurde, wird im Schritt 66 überprüft, ob der Aktor bzw. die Aktorik oder ein entsprechendes Bauteil getauscht wurde.

Sofern dies der Fall ist, wird im Schritt 68 eine Tastpunktadaption durchgeführt.

Im Schritt 70 wird überprüft, ob die Differenz bzw. der Betrag der Differenz aus dem im Schritt 68 ermittelten bzw. adaptierten Tastpunkt und einem langfristigen Tastpunkt größer als eine vorbestimmte Schwelle ist.

Der langfristige Tastpunkt ist in diesem Fall insbesondere der Tastpunkt, der vor dem Tausch des Aktors bzw. eines Bauteils der Aktorik als letzter Tastpunkt adaptiert wurde.

Sofern im Schritt 70 festgestellt wurde, dass die Differenz bzw. die betragsmäßige Differenz nicht größer als die Schwelle ist, wird, wie durch das Bezugszeichen 72 angedeutet, im Schritt 42 gemäß dem in Fig. 3 dargestellten beispielhaften Verfahren fortgefahren.

Sofern im Schritt 70 allerdings ermittelt wird, dass die Tastpunktdifferenz bzw. die betragsmäßige Tastpunktdifferenz größer als die Schwelle ist, werden die im Schritt 34 sowie im Schritt 40 des Verfahrens gemäß Fig. 3 abgespeicherten Tastpunkte im Schritt 74 um die Tastpunktdifferenz korrigiert, die im Schritt 70 festgestellt wurde, also um die Differenz bzw. betragsmäßige Differenz des im Schritt 68 festgestellten bzw. adaptierten Tastpunkts und des langfristigen Tastpunkts, der vor dem Kupplungs- bzw. Aktoriktausch als letzter detektiert bzw. abgespeichert wurde.

An den Schritt 74 anschließend wird, wie durch das Bezugszeichen 76 schematisch angedeutet, im Schritt 42 des in Fig. 3 dargestellten, beispielhaften erfindungsgemäßen Verfahrens fortgefahren.

## Patentansprüche

1. Verfahren zur Diagnose einer Kupplungseinrichtung, insbesondere zur Abschätzung oder Ermittlung des Kupplungsverschleißes einer Reibungskupplungseinrichtung, wobei
- wenigstens ein vorbestimmter erster Kennwert ermittelt und/oder überwacht wird;
- in Abhängigkeit von Veränderungen dieses ersten Kennwertes und/oder in Abhängigkeit eines Vergleiches dieses Kennwertes mit einer Schwelle quantitativ oder qualitativ gemäß einer vorbestimmten Charakteristik ermittelt oder abgeschätzt wird, ob Verschleiß an der Kupplungseinrichtung gegeben ist und/oder eine vorbestimmte Verschleißgrenze erreicht oder überschritten ist; und wobei
- ein elektrisches Signal erzeugt wird, welches qualitativ oder quantitativ anzeigt, dass Kupplungsverschleiß gegeben ist, wenn Verschleiß oder das Erreichen oder Überschreiten einer vorbestimmten Verschleißgrenze der Kupplungseinrichtung festgestellt wurde.

2. Verfahren zur Diagnose einer Kupplungseinrichtung, insbesondere zur Abschätzung oder Ermittlung von Funktionsbeeinträchtigungen des Betätigungssystems einer Kupplungseinrichtung, wobei
- wenigstens ein vorbestimmter erster Kennwert ermittelt und/oder überwacht wird;
- in Abhängigkeit von Veränderungen dieses ersten Kennwertes und/oder in Abhängigkeit eines Vergleiches dieses Kennwertes mit einer Schwelle quantitativ oder qualitativ gemäß einer vorbestimmten Charakteristik ermittelt wird, ob eine Funktionsbeeinträchtigung der Kupplungseinrichtung, und insbesondere eine Funktionsbeeinträchtigung des Betätigungssystems der Kupplungseinrichtung, gegeben ist; und wobei
- ein elektrisches Signal erzeugt wird, welches qualitativ oder quantitativ anzeigt, dass Funktionsbeeinträchtigung gegeben ist, wenn eine solche festgestellt wurde.

3. Verfahren nach einem der vorangehenden Ansprüche, **dadurch gekennzeichnet, dass** der erste Kennwert elektronisch verarbeitet und/oder übertragen und/oder gespeichert wird.

4. Verfahren nach einem der vorangehenden Ansprüche, **dadurch gekennzeichnet, dass** zur Abschätzung oder Ermittlung des Kupplungsverschleißes und/oder einer Funktionsbeeinträchtigung der Kupplungseinrichtung überwacht wird, ob längerfristige Veränderungen des ersten Kennwerts gegeben sind.

5. Verfahren nach einem der vorangehenden Ansprüche, **dadurch gekennzeichnet, dass** ein Fehlerspeicher vorgesehen ist, und ein vorbestimmter Eintrag in diesem Fehlerspeicher gesetzt wird, wenn ein vorbestimmter Verschleiß oder das Erreichen einer vorbestimmten Verschleißgrenze festgestellt wird.

6. Verfahren nach einem der vorangehenden Ansprüche, **dadurch gekennzeichnet, dass** ein akustisches Signal und/oder ein optisches Signal erzeugt wird, wenn ein vorbestimmter Verschleiß oder das Erreichen einer vorbestimmten Verschleißgrenze festgestellt wird und/oder wenn eine Funktionsbeeinträchtigung der Kupplungseinrichtung, wie Funktionsbeeinträchtigung des Ausrücksystems, detektiert wird.

7. Verfahren nach einem der vorangehenden Ansprüche, **dadurch gekennzeichnet, dass** die Kupplungseinrichtung eine Betätigungseinrichtung aufweist und der erste Kennwert eine Stellung eines vorbestimmten Bauteils dieser Betätigungseinrichtung ist.

8. Verfahren nach einem der vorangehenden Ansprüche, **dadurch gekennzeichnet, dass** die Betätigungseinrichtung einen elektronisch gesteuerten Aktor aufweist und überwacht wird, ob der Aktorweg eine vorbestimmte Aktorwegschwelle überschreitet, wobei dieser Aktorwegschwelle eine vorbestimmte Verschleißgrenze der Kupplungseinrichtung zugeordnet ist und wobei festgestellt wird, dass die Verschleißgrenze erreicht und/oder überschritten ist, wenn festgestellt wird, dass der Aktorweg die Aktorwegschwelle erreicht und/oder überschritten hat.

9. Verfahren nach einem der vorangehenden Ansprüche, **dadurch gekennzeichnet, dass** die Betätigungseinrichtung einen Geberzylinder und einen Nehmerzylinder aufweist und überwacht wird, ob der Geber- und/oder Nehmerzylinder eine vorgestimmte Wegschwelle erreicht und/oder überschreitet, wobei dieser Wegschwelle eine vorbestimmte Verschleißgrenze der Kupplungseinrichtung zugeordnet ist und wobei festgestellt wird, dass die Verschleißgrenze erreicht und/oder überschritten ist, wenn festgestellt wird, dass der Zylinder die Wegschwelle erreicht und/oder überschritten hat.

10. Verfahren nach einem der vorangehenden Ansprüche, **dadurch gekennzeichnet, dass** die Verlustleistung und/oder die Verlustenergie an der Kupplungseinrichtung ermittelt wird und in Abhängigkeit der Verlustleistung und/oder der Verlustenergie ermittelt wird, ob Verschleiß an der Kupplungseinrichtung gegeben ist.

11. Verfahren nach einem der vorangehenden Ansprüche, **dadurch gekennzeichnet, dass** die Verlustleistung an der Kupplungseinrichtung ermittelt wird und zeitlich integriert wird, wobei überprüft wird, ob die zeitlich integrierte Verlustleistung eine vorbestimmte Schwelle erreicht oder überschreitet und wobei festgestellt wird, dass ein vorbestimmter Verschleiß der Kupplungseinrichtung gegeben ist, wenn die zeitlich integrierte Verlustleistung die vorbestimmte Schwelle erreicht oder überschreitet.

12. Verfahren nach einem der vorangehenden Ansprüche, **dadurch gekennzeichnet, dass** der erste Kennwert ein vorbestimmter Parameter der Kupplungskennlinie ist.

13. Verfahren nach einem der vorangehenden Ansprüche, **dadurch gekennzeichnet, dass** der erste Kennwert der Tastpunkt ist, wobei der Tastpunkt eine Stellung der Kupplungseinrichtung ist, bei der diese ein vorbestimmtes Drehmoment übertragen kann.

14. Verfahren nach einem der vorangehenden Ansprüche, **dadurch gekennzeichnet, dass** der Tastpunkt im Betrieb mehrfach adaptiert wird.

15. Verfahren nach einem der vorangehenden Ansprüche, **dadurch gekennzeichnet, dass** Tastpunkt der Kupplungseinrichtung zu unterschiedlichen Zeitpunkten ermittelt wird, wobei ermittelte Werte miteinander verglichen werden und wobei festgestellt wird, dass ein Verschleiß der Kupplungseinrichtung gegeben ist und/oder festgestellt wird, dass eine Funktionsbeeinträchtigung der Kupplungseinrichtung, und insbesondere eine Funktionsbeeinträchtigung des Betätigungssystems der Kupplungseinrichtung, gegeben ist, wenn die Differenz der Werte des Tastpunktes eine vorbestimmte Schwelle überschreitet.

16. Verfahren nach einem der vorangehenden Ansprüche, **dadurch gekennzeichnet, dass** zumindest einer dem Vergleich zugeführten Werte des Tastpunktes ein Wert ist, der nach einer Tastpunktadaption ermittelt wurde.

17. Verfahren nach einem der vorangehenden Ansprüche, **dadurch gekennzeichnet, dass** bei der. Abschätzung oder Ermittlung des Kupplungsverschleißes und/oder bei der Abschätzung oder Ermittlung, ob eine Funktionsbeeinträchtigung der Kupplungseinrichtung gegeben ist, gemäß einer vorbestimmten Charakteristik berücksichtigt wird, ob die Kupplungseinrichtung in der Einlaufphase ist.

18. Verfahren nach einem der vorangehenden Ansprüche, **dadurch gekennzeichnet, dass** die Abschätzung oder Ermittlung des Kupplungsverschleißes und/oder die Abschätzung oder Ermittlung, ob eine Funktionsbeeinträchtigung der Kupplungseinrichtung gegeben ist, vorgenommen wird, wenn die Kupplungseinrichtung außerhalb der Einlaufphase ist.

19. Verfahren nach einem der vorangehenden Ansprüche, **dadurch gekennzeichnet, dass** gemäß einer vorbestimmten Charakteristik überwacht wird, ob die Kupplungseinrichtung in der Einlaufphase ist.

20. Verfahren nach einem der vorangehenden Ansprüche, **dadurch gekennzeichnet, dass** die Kupplungseinrichtung in einem Kraftfahrzeug verbaut ist und überwacht wird, ob die Gesamtlaufstrecke des Kraftfahrzeuges und/oder die Gesamtlaufstrecke des Kraftfahrzeugs seit Einbau der Kupplungseinrichtung größer als eine vorbestimmte Schwelle ist, wobei die Beendigung der Einlaufphase festgestellt wird, wenn die Gesamtlaufstrecke diese Schwelle überschreitet.

21. Verfahren nach einem der vorangehenden Ansprüche, **dadurch gekennzeichnet, dass** die Reibenergie der Kupplungseinrichtung erfasst und kumuliert wird, wobei überprüft wird ob die kumulierte Reibenergie eine vorbestimmte Schwelle überschreitet und wobei die Beendigung der Einlaufphase festgestellt wird, wenn die kumulierte Reibenergie diese Schwelle überschreitet.

22. Verfahren nach einem der vorangehenden Ansprüche, **dadurch gekennzeichnet, dass** die Kupplungseinrichtung in einem Kraftfahrzeug verbaut ist und in Abhängigkeit von der Kupplungstemperatur und/oder der seit dem Einbau der Kupplungseinrichtung vergangenen Zeit gemäß einer vorbestimmten Charakteristik ermittelt wird, ob die Einlaufphase beendet ist.

23. Verfahren nach einem der vorangehenden Ansprüche, **dadurch gekennzeichnet, dass** die Kupplungseinrichtung in einem Kraftfahrzeug verbaut ist und die kumulierte Zeitperiode ermittelt wird, während welcher die Kupplungstemperatur seit ihrem Einbau oberhalb einer vorbestimmten Grenze ist, wobei die Beendigung der Einlaufphase festgestellt wird, wenn die kumulierte Zeitperiode eine vorbestimmte Grenze erreicht oder überschritten hat.

24. Verfahren nach einem der vorangehenden Ansprüche, **dadurch gekennzeichnet, dass** redundant und/oder zur Plausibilitätsüberprüfung qualitativ und/oder quantitativ mehrfach ermittelt wird, ob Verschleiß der Kupplungseinrichtung gegeben ist oder ob eine vorbestimmte Verschleißgrenze erreicht ist, und/oder, ob eine Funktionsbeeinträchtigung der Kupplungseinrichtung, und insbesondere eine Funktionsbeeinträchtigung des Betätigungssystems der Kupplungseinrichtung, gegeben ist.

25. Verfahren nach einem der vorangehenden Ansprüche, **dadurch gekennzeichnet, dass** der zu Beginn der Einlaufphase gegebene Tastpunkt ermittelt wird und/oder der Tastpunkt, der im wesentlichen beim Ablauf der Einlaufphase gegeben ist, und dass der Tastpunkt nach Ablauf der Einlaufphase wenigstens einmal adaptiert wird, wobei wenigstens ein nach Ablauf der Einlaufphase ermittelter Tastpunkt mit dem Tastpunkt verglichen wird, der zu Beginn der Einlaufphase gegeben ist, und/oder mit dem Tastpunkt, der im wesentlichen beim Ablauf der Einlaufphase gegeben ist, und wobei in Abhängigkeit der Differenz quantitativ oder qualitativ ermittelt wird, ob Verschleiß an der Kupplungseinrichtung gegeben ist, und/oder ob eine Funktionsbeeinträchtigung der Kupplungseinrichtung, insbesondere des Ausrücksystems der Kupplungseinrichtung, gegeben ist.

26. Verfahren nach einem der vorangehenden Ansprüche, **dadurch gekennzeichnet, dass** der zu Beginn der Einlaufphase gegebene Tastpunkt ermittelt wird und/oder der Tastpunkt, der nach Ablauf der Einlaufphase gegeben ist, und dass der Tastpunkt nach Ablauf der Einlaufphase wenigstens einmal adaptiert wird, wobei wenigstens ein nach Ablauf der Einlaufphase ermittelter Tastpunkt mit dem Tastpunkt verglichen wird, der zu Beginn der Einlaufphase gegeben ist, und/oder mit dem Tastpunkt, der nach Ablauf der Einlaufphase gegeben ist, wobei quantitativ oder qualitativ festgestellt wird, dass Verschleiß an der Kupplungseinrichtung gegeben ist oder eine bestimmte Verschleißgrenze erreicht ist, wenn die Tastpunktdifferenz größer als eine vorbestimmte Schwelle ist.

27. Verfahren nach einem der vorangehenden Ansprüche, **dadurch gekennzeichnet, dass** der Tastpunkt, der zu Beginn der Einlaufphase ermittelt wird, und/oder der Tastpunkt, der nach Ablauf der Einlaufphase gegeben ist, und/oder der wenigstens eine nach Ablauf der Einlaufphase adaptierte Tastpunkt gespeichert wird.

28. Verfahren nach einem der vorangehenden Ansprüche, **dadurch gekennzeichnet, dass** der Tastpunkt, der zu Beginn der Einlaufphase ermittelt wird, und/oder der Tastpunkt, der nach Ablauf der Einlaufphase gegeben ist, und/oder der wenigstens eine nach Ablauf der Einlaufphase adaptierte Tastpunkt in einer nicht-flüchtigen Speicherzelle gespeichert wird.

29. Verfahren nach einem der vorangehenden Ansprüche, **dadurch gekennzeichnet, dass** in Abhängigkeit der zeitlichen Änderungsrate des Tastpunktes qualitativ oder quantitativ ermittelt wird, ob Verschleiß der Kupplungseinrichtung gegeben ist, und/oder ob eine Funktionsbeeinträchtigung der Kupplungseinrichtung, insbesondere eine Funktionsbeeinträchtigung des Betätigungssystems der Kupplungseinrichtung, gegeben ist.

30. Verfahren nach einem der vorangehenden Ansprüche, **dadurch gekennzeichnet, dass** die Kupplungseinrichtung gemäß einer vorbestimmten ersten Steuerungsstrategie angesteuert wird, solange noch nicht festgestellt wurde, dass eine vorbestimmte Verschleißgrenze erreicht wurde, und dass die Kupplungseinrichtung gemäß einer vorbestimmten zweiten, von der ersten verschiedenen Steuerungsstrategie angesteuert wird, wenn festgestellt wurde, dass eine vorbestimmte Verschleißgrenze erreicht wurde.

31. Verfahren nach Anspruch 30, **dadurch gekennzeichnet, dass** die zweite Steuerungsstrategie so ist, dass der in Reibverlustenergie umgewandelte Anteil des Energieeintrags in die Kupplungseinrichtung gering gehalten wird.

32. Verfahren nach einem der vorangehenden Ansprüche, **dadurch gekennzeichnet, dass** der erste Kennwert automatisiert ermittelt wird.

33. Verfahren nach einem der vorangehenden Ansprüche, **dadurch gekennzeichnet, dass** der aktuelle Verschleiß(grad) der Kupplungseinrichtung angezeigt wird.

34. Verfahren nach einem der vorangehenden Ansprüche, **dadurch gekennzeichnet, dass** die Kupplungseinrichtung in einem Kraftfahrzeug montiert ist und das Verfahren zumindest teilweise durchgeführt wird und dann zumindest ein im Antriebsstrang das Drehmoment übertragendes Kupplungsteil ausgetauscht wird, wobei nach diesem Austausch das Verfahren neu gestartet wird.

35. Verfahren nach einem der vorangehenden Ansprüche, **dadurch gekennzeichnet, dass** die Kupplungseinrichtung in einem Kraftfahrzeug montiert ist und eine Betätigungseinrichtung mit einem Aktor und einem Ausrücksystem aufweist und das Verfahren zumindest teilweise durchgeführt wird, wobei ein Referenztastpunkt verwendet wird, und wobei dann der Aktor und/oder das Ausrücksystem zumindest teilweise ausgetauscht wird, und wobei nach diesem Austausch der Tastpunkt adaptiert und mit einem Tastpunkt verglichen wird, der vor dem Austausch als letzter adaptierter Tastpunkt abgespeichert wurde, und wobei das Verfahren fortgesetzt und der wenigstens eine Referenztastpunkt korrigiert wird, wenn der neue adaptierte Tastpunkt um mehr als eine vorbestimmten Schwelle von dem Tastpunkt abweicht, der als letzter vor dem Austausch abgespeichert wurde, wobei der Korrekturwert der festgestellten Tastpunktabweichung zwischen den adaptierten Tastpunkten entspricht.

36. Verfahren nach einem der vorangehenden Ansprüche, **dadurch gekennzeichnet, dass** die Kupplungseinrichtung in einem Kraftfahrzeug montiert ist und eine Betätigungseinrichtung mit einem Aktor und einem Ausrücksystem aufweist und das Verfahren zumindest teilweise durchgeführt wird, wobei dann der Aktor und/oder ein das Ausrücksystem zumindest teilweise ausgetauscht wird, und wobei nach diesem Austausch der Tastpunkt adaptiert und mit einem Tastpunkt verglichen wird, der vor dem Austausch als letzter adaptierter Tastpunkt abgespeichert wurde, und wobei das Verfahren fortgesetzt wird, wenn die Abweichung zwischen dem neuen adaptierten Tastpunkt, und dem Tastpunkt, der als letzter adaptierter Tastpunkt vor dem Austausch abgespeichert wurde, eine vorbestimmte Schwelle nicht überschreitet.

37. Verfahren nach einem der vorangehenden Ansprüche, **dadurch gekennzeichnet, dass** die Kupplungseinrichtung ein Ausrücksystem mit einer hydraulischen Übertragungsstrecke aufweist, wobei eine Funktionsbeeinträchtigung des Ausrücksystems festgestellt wird, die gegebenenfalls über ein Signal angezeigt wird, wenn ein adaptierter Tastpunkt von wenigstens einem vorbestimmten Referenztastpunkt um mehr als eine vorbestimmte Schwelle abweicht.

38. Verfahren nach einem der vorangehenden Ansprüche, **dadurch gekennzeichnet, dass** wenigstens ein Referenztastpunkt der Kupplungseinrichtung ein Tastpunkt ist, der zu Beginn der Einlaufphase der Kupplungseinrichtung ermittelt wurde, und/oder wenigstens ein Referenztastpunkt der Kupplungseinrichtung ein Tastpunkt ist, der während der Einlaufphase der Kupplungseinrichtung ermittelt wurde, und/oder wenigstens ein Referenztastpunkt der Kupplungseinrichtung ein Tastpunkt ist, der im wesentlichen bei Beendigung der Einlaufphase der Kupplungseinrichtung ermittelt wurde.

39. Verfahren nach einem der vorangehenden Ansprüche, **dadurch gekennzeichnet, dass** ein vorbestimmter Eintrag in einem Fehlerspeicher gesetzt wird, wenn festgestellt wird, dass eine Funktionsbeeinträchtigung eines Ausrücksystems des Kupplungseinrichtung gegeben ist.

40. Reibungskupplungseinrichtung für ein Kraftfahrzeug mit einem Betätigungssystem, das einen Aktor aufweist sowie ein von diesem Aktor belastbares Ausrücksystem, wobei ferner ein elektronisches Steuergerät vorgesehen ist, welches den Aktor ansteuern kann, wobei eine Speichereinrichtung vorgesehen ist, in welchem ein Steuerungssoftware abgelegt ist, die ein Verfahren gemäß einem der vorangehenden Ansprüche steuern kann, und zwar insbesondere automatisch.

41. Reibungskupplungseinrichtung gemäß Anspruch 40, **dadurch gekennzeichnet, dass** diese Reibungskupplungseinrichtung eine Anfahrkupplung eines Kraftfahrzeuges ist.

42. Reibungskupplungseinrichtung gemäß einem der Ansprüche 40 und 41, **dadurch gekennzeichnet, dass** ein Kupplungspedal vorgesehen ist, durch dessen Betätigung Kupplungsbetätigungen ausgelöst werden können, wobei bei Betätigung dieses Kupplungspedals ein elektrisches Signal zum Betätigen der Reibungskupplungseinrichtung erzeugt wird.

43. Reibungskupplungseinrichtung gemäß einem der Ansprüche 40 bis 42, **dadurch gekennzeichnet, dass** die Reibungskupplungseinrichtung ein Ausrücksystem mit einer hydraulischen Übertragungsstrecke aufweist.

44. Reibungskupplungseinrichtung gemäß einem der Ansprüche 40 bis 43, **dadurch gekennzeichnet, dass** die Reibungskupplungseinrichtung ein Ausrücksystem mit einer mechanischen Übertragungsstrecke aufweist.

45. Reibungskupplungseinrichtung gemäß einem der Ansprüche 40 bis 44, **dadurch gekennzeichnet, dass** des elektronische Steuergerät einen Fehlerspeicher aufweist.

46. Antriebstrangsystem für ein Kraftfahrzeug mit einem mit einer Brennkraftmaschine gekoppelten Antriebsstrang, der eine Reibungskupplungseinrichtung gemäß einem der Ansprüche 40 bis 45 aufweist, und mit einer Getriebeeinrichtung, in welcher unterschiedliche Übersetzungen geschaltet werden können.

47. Antriebstrangsystem nach Anspruch 46, **dadurch gekennzeichnet, dass** die Getriebeeinrichtung ein Automatisiertes Schaltgetriebe aufweist.

48. Kraftfahrzeug mit einer Reibungskupplungseinrichtung nach einem der Ansprüche 40 bis 45 und/oder mit einem Antriebsstrangsystem gemäß einem der Ansprüche 46 bis 47, wobei eine in der Fahrgastzelle des Kraftfahrzeuges angeordnete Signaleinrichtung vorgesehen ist, welche ein Signal anzeigt, wenn eine vorbestimmte Verschleißgrenze der Reibungskupplungseinrichtung erreicht ist und/oder welche den aktuellen Verschleißgrad der Reibungskupplungseinrichtung anzeigt, und/oder welche anzeigt, wenn eine Funktionsbeeinträchtigung der Reibungskupplungseinrichtung, insbesondere eine Funktionsbeeinträchtigung des Betätigungssystems der Reibungskupplungseinrichtung, detektiert wurde.

49. Kraftfahrzeug mit einer Reibungskupplungseinrichtung nach einem der Ansprüche 40 bis 45 und/oder mit einem Antriebsstrangsystem gemäß einem der Ansprüche 46 bis 47, **dadurch gekennzeichnet, dass** das Kraftfahrzeug einen Bordcomputer mit einer in der Fahrgastzelle des Kraftfahrzeuges angeordneten Anzeigeeinrichtung, wie Monitor, aufweist, wobei dieser Bordcomputer über seine Anzeigeeinrichtung den aktuellen Verschleißgrad der Reibungskupplungseinrichtung anzeigt und/oder anzeigt, wenn eine vorbestimmte Verschleißgrenze der Reibungskupplungseinrichtung erreicht ist, und/oder, wenn eine Funktionsbeeinträchtigung der Reibungskupplungseinrichtung, insbesondere eine Funktionsbeeinträchtigüng des Betätigungssystems der Reibungskupplungseinrichtung, detektiert wurde.
